# EUROPÄISCHE PATENTSCHRIFT

(11) **EP 0 481 388 B1**
(45) Veröffentlichungstag und Bekanntmachung des Hinweises auf die Patenterteilung: **18.06.1997**
(21) Anmeldenummer: 91117454.8
(22) Anmeldetag: 14.10.1991
(51) Int. Cl.: G06K 19/06, G06K 19/14, B42D 15/10

(54) **Mehrschichtiger, kartenförmiger Datenträger und Verfahren zur Herstellung desselben**
Data storage medium in form of card with several layers and method for the production
Support de données en forme de carte avec plusieurs couches et procédé pour sa fabrication

(30) Priorität: 19.10.1990 DE 4033300
(43) Veröffentlichungstag der Anmeldung: 22.04.1992
(73) Patentinhaber: GAO Gesellschaft für Automation und Organisation mbH, 81307 München (DE)
(72) Erfinder: Lob, Erwin, W-8000 München 70 (DE); Merkle, Hansjürgen, W-8000 München 60 (DE); Hierweger, Alexander, W-8000 München 70 (DE); Killar, Wolfgang, W-8000 München 90 (DE); Kaule, Wittich, Dr., W-8089 Emmering (DE)
(74) Vertreter: Klunker . Schmitt-Nilson . Hirsch

(56) Entgegenhaltungen:
- EP-A- 0 216 947
- EP-A- 0 219 012
- EP-A- 0 230 497
- EP-A- 0 372 274
- DE-A- 2 654 208
- FR-A- 2 548 801

## Beschreibung

Die Erfindung betrifft einen mehrschichtigen, kartenförmigen Datenträger mit einer im sichtbaren Wellenlängenbereich schwarz erscheinenden Schicht, die für Prüfstrahlen in einem unsichtbaren Wellenlängenbereich außerhalb der Wellenlängen zwischen etwa 400 und 700 nm durchlässig ist. Die Erfindung betrifft ebenso ein Verfahren zum Einbringen einer Markierung in einen kartenförmigen Datenträger mit einer im sichtbaren Wellenlängenbereich schwarz erscheinenden Schicht, die für Prüfstrahlen in einem unsichtbaren Wellenlängenbereich außerhalb der Wellenlängen zwischen etwa 400 und 700 nm durchlässig ist.

Bekannte Datenträger der eingangs genannten Art haben den Vorteil, daß ein Betrachter die unter der schwarzen Schicht verborgene Echtheitsmarkierung ohne Hilfsmittel nicht ausspähen kann. Fälschungen werden dadurch erschwert. Andererseits lassen sich die Markierungen maschinell, beispielsweise mittels Infrarotstrahlen ohne weiteres auslesen.

Die bekannten Datenträger haben den Nachteil, daß die Markierungen während der Herstellung der Karte erzeugt werden müssen, da in einem letzten Herstellungsschritt aie schwarz erscheinende Folie und gegebenenfalls weitere Deckschichten auflaminiert werden müssen. Gerade bei Ausweis- und Kreditkarten ergibt sich jedoch in der Regel die Notwendigkeit, personenbezogene Daten, das heißt Daten, die den berechtigten Benutzer einer solchen Karte identifizieren, in einem letzten Bearbeitungsschritt, häufig vor Ort, einzubringen. Ein solches nachträgliches Einbringen der Markierung in die ansonsten fertige Karte ist bei den bekannten Datenträgern nicht möglich (DE-B 26 54 208).

Es sind auch Datenträger bekannt, bei denen bestimmte Informationen in einem letzten Arbeitsgang auf eine schwarz erscheinende Deckschicht aufgedruckt werden, wobei die Markierungen, welche die Information darstellen, im sichtbaren Wellenlängenbereich etwa gleich stark absorbieren wie die schwarze Deckschicht, so daß die Information mit bloßem Auge nicht zu erkennen ist. Die Hintergrundfarbe ist jedoch beispielsweise im Infrarotbereich durchlässig, wogegen die Farbe, mit welcher die Information gedruckt wurde, im Infrarotbereich absorbiert. Bei Betrachtung mit einem im infraroten Spektralbereich arbeitenden Lesegerät können Markierungen und damit die Information einwandfrei gelesen werden. Der Hintergrund erscheint beispielsweise stark remittierend, vergleichsweise weiß, wogegen der Informationsdruck stark absorbierend, vergleichsweise schwarz erscheint.

Obwohl bei dieser Karte personenbezogene Informationen in einem letzten Arbeitsgang aufgedruckt werden können, weist der bekannte Datenträger den Nachteil auf, daß diese Informationen notwendigerweise an der äußeren Oberfläche liegen und damit Manipulationen und Fälschungsversuchen ohne weiteres zugänglich sind (DE-B 25 30 905).

Weiterhin ist ein Datenträger bekannt, bei dem ein maschinenlesbarer Binärcode mit einer undurchsichtigen Schutzschicht überdeckt ist, so daß der Binärcode für das bloße Auge unsichtbar, für ein Prüfgerät aber lesbar ist. Das Prüfgerät arbeitet vorzugsweise mit einer Prüfwellenlänge, für welche die Schutzschicht durchlässig, der Binärcode aber absorbierend ist. Auch für diesen Datenträger gilt das bereits eingangs Gesagte, daß nämlich der Binärcode während des Herstellungsprozesses des Datenträgers eingebracht werden muß, so daß eine nachträgliche "Personalisierung" vor Ort nicht möglich ist (FR-A 2 548 801).

Der Erfindung liegt die Aufgabe zugrunde, einen Datenträger mit einer Markierung vorzuschlagen, die mit bloßem Auge nicht sichtbar ist und die, obwohl in einem letzten Verfahrensschritt eingebracht, nicht manipulierbar oder fälschbar sein soll.

Diese Aufgabe wird durch die in den unabhängigen Ansprüchen angegebenen Merkmale gelöst.

Vorteilhafte Weiterbildungen der Erfindung sind Gegenstand der Unteransprüche.

Die Erfindung beruht auf der Erkenntnis, daß durch Verwendung eines Laserstrahlschreibers die Informationen in den inneren Schichtaufbau einbringbar sind und dies auch dann möglich ist, wenn der Schichtaufbau visuell undurchsichtig ist, solange die zu durchdringenden Schichten für die Wellenlänge des Lasers ausreichend durchlässig sind. Auf diese Weise sind auch Informationen im Volumen von ausreichend sensibilisierten schwarzen Schichten erzeugbar. Damit hat man die Möglichkeit, diese Information in einem letzten Verfahrensschritt in die praktisch fertige Karte einzubringen, was auch dezentral und unabhängig vom Kartenhersteller erfolgen kann. Da die Information nicht an der äußeren Oberfläche des Datenträgers, sondern im Inneren der Schichten, welche den Kartenaufbau bilden, entsteht, ist sie nicht zugänglich und somit auch nicht fälschbar. Bei visueller Betrachtung offenbaren sich auch in Durchlicht keine Informationen, da die opake schwarze Tarnschicht den direkten visuellen Zugang zu den Laserdaten verwehrt.

Da die schwarze Schicht für die Prüfwellenlänge vorzugsweise IR-Licht durchlässig ist, kann die Markierung mit einem geeigneten Prüfgerät ohne weiteres ausgelesen werden, da die Markierung selbst für die Prüfstrahlung undurchlässig ist.

Falls aus Gründen der äußeren Gestaltung eine Bedruckung des Datenträgers mit opaken Farben erforderlich ist, die für die Prüfstrahlung und/oder die Laserstrahlung undurchlässig ist, wird vorzugsweise in der Druckschicht ein für die Laserstrahlung durchlässiges Fenster freigelassen, das dem Betrachter schwarz erscheint und durch welches hindurch die Markierungen eingebracht und ausgelesen werden können.

Ein ästhetisch besonders ansprechender Effekt ergibt sich, wenn die schwarze Schicht mit iriodinhaltigen Folien und/oder Drucken abgedeckt wird. Iriodin- oder Perlglanzfarben enthalten Pigmente aus Glimmerplättchen, die mit einem Metalloxid beschichtet sind. Aus diesen Pigmenten hergestellte Farben oder mit den Pigmenten versetzte Folien wirken auf schwarzem Hintergrund besonders effektvoll. Da sie für Licht im Infrarotbereich durchlässig sind, wird weder das Einschreiben, noch das Auslesen der Markierungen durch sie behindert.

In einer Weiterbildung der Erfindung kann die schwarze Schicht statt vollflächig auch in Form von lesbaren Mustern, Zeichen oder einem Logo auf dem Informationsträger aufgebracht sein. Die äußere Kontur der schwarzen Schicht kann eine bestimmte Information darstellen.

Vorzugsweise wählt man die Muster oder Zeichen in einer Größe, die vom Lesekopf eines handeslüblichen OCR-Lesegeräts erfaßbar sind. Es können aber auch die zusätzlichen Eigenschaften handelsüblicher OCR-Lesegeräte ausgenutzt werden, da diese in der Regel eine wesentlich höhere Informationsdichte zu erfassen in der Lage sind als sie die OCR-Schrift darstellt. Unter der schwarzen Schicht kann somit beispielsweise auch ein Binärcode mit einer Informationsdichte verborgen sein, die dem maximalen Auflösevermögen der OCR-Lesegeräte angepaßt ist. Natürlich kann auch die OCR-Schrift mit den schwarzen Zeichen, Mustern oder dem Logo kombiniert werden, wobei die jeweiligen Informationen in einem bestimmten Verhältnis zueinander stehen können.

Zur Einbringung der Markierung wird vorzugsweise ein im IR-Bereich arbeitender Laserschreiber verwendet. Die Beschriftung wird vorzugsweise in Rasterschrift durchgeführt, d. h. daß sich die einzelnen Laserpunkte nicht überlappen. Die Intensität des Laserschreibers wird dabei so eingestellt, daß keine Verwerfungen bzw. thermischen Verzüge der Oberfläche entstehen, die im Glanzwinkel erkennbar wären.

Verwerfungen bzw. thermische Verzüge der Oberfläche können gemäß einer Weiterbildung der Erfindung vor allem dann vermieden werden, wenn ein besonderer Schichtaufbau für die Karte verwendet wird. Dabei befindet sich die schwarz erscheinende Schicht auf einer opaken weißen Schicht, die die sogenannte Inlettfolie der Karte bildet. Die schwarze Schicht ist durch einen entsprechenden Zusatz, beispielsweise Ruß, für die verwendete Laserstrahlung stark sensibilisiert. Über der schwarzen Schicht ist eine weitere Schicht vorgesehen, die die Deckfolie der Karte bildet. Diese Schicht ist transparent und für die verwendete Laserstrahlung schwach sensibilisiert. Bei diesem Aufbau beginnt die Verfärbung des Folienmaterials aufgrund der Einwirkung des Laserstrahls zunächst an der Grenzschicht zwischen der stark sensibilisierten schwarzen Folie und der die Laserstrahlung reflektierenden weißen Inlettfolie und pflanzt sich im Volumen der schwarzen Folie bis zu deren Oberfläche fort. Es hat sich dabei gezeigt, daß sich die Verfärbung nur sehr gering bzw. gar nicht in die schwach sensibilisierte Deckfolie fortsetzt. Mit diesem Aufbau sind stark kontrastierende, für ein Lesegerät entsprechend zuverlässig erfaßbare, Markierungen erzielbar, während die Oberfläche der schwach sensibilisierten Schicht keinerlei Verzüge oder Verformungen aufweist, die im Glanzwinkel erkennbar wären.

Zur Einfärbung der schwarz erscheinenden Folie können beliebige infrarotdurchlässige Farben verwendet werden. Die Farbkonzentration liegt im Prozent-Bereich. Wichtig im erfindungsgemäßen Zusammenhang ist, daß die Folie mindestens so dunkel sein muß, wie die unterhalb der Folie oder in der Folie erzeugte Laserschrift bzw. Markierung. Geeignete Farbstoffe sind beispielsweise Microlithe von der Firma Ciba Geigy.

Weitere Vorteile und Weiterbildungen der Erfindung ergeben sich aus den Unteransprüchen sowie aus der nachfolgenden Beschreibung der Ausführungsbeispiele anhand der beigefügten Zeichnungen. Darin zeigen:
- Fig. 1: einen Querschnitt durch einen kartenförmigen Datenträger,
- Fig. 2: eine Markierung im Binär-Code zusammen mit einer OCR-Schrift und
- Fig. 3: den Binär-Code der Fig. 2, abgedeckt mit einer undurchsichtigen, schwarz erscheinenden Schicht.

Der Kartenaufbau weist eine oberste Deckfolie 10 auf, die für Licht im sichtbaren Wellenlängenbereich, d. h. zwischen 400 und 700 nm durchlässig ist. Die Schicht ist auch für einen im IR-Bereich arbeitenden Laserschreiber durchlässig. Unterhalb der Deckfolie 10 ist eine Folie 12 angeordnet, die mit einer infrarotdurchlässigen Farbe schwarz eingefärbt ist. Ein geeigneter Farbstoff ist beispielsweise ein Microlith oder ein Gemisch von Microlithen von der Firma Ciba Geigy. Die Konzentration des Farbstoffs liegt im Prozent-Bereich.

Die Schicht ist beispielsweise durch einen Rußzusatz für die Energie des verwendeten IR-Lasers sensibilisiert, d. h. die Laserstrahlung wird durch das Folienmaterial so stark absorbiert, daß im Fokus des Laserstrahls eine thermische Zersetzung mit damit verbundener Schwärzung erfolgt. Die mit dem Laserstrahl eingebrachten Markierungen sind mit 14 bezeichnet. Mit bloßem Auge kann man die Markierungen 14 in der Schicht 12 nicht erkennen, da die Folie 12 so schwarz eingefärbt ist, daß die ebenfalls schwarzen Markierungen 12 keinen sichtbaren Kontrast bilden.

Die die schwarze Schicht 12 abdeckende Schicht 10 kann ebenfalls durch einen entsprechend geeigneten Rußzusatz schwach sensibilisiert sein.

Unterhalb der schwarzen Folie kann eine Inlettfolie 16 angeordnet sein, die als Füllstoff beispielsweise Titandioxid enthält und daher weiß erscheint. Die Karte kann rückseitig von einer Deckschicht 18 oder weiteren Schichten abgedeckt sein. Im erfindungsgemäßen Zusammenhang ist die weitere Schichtenfolge ohne Bedeutung.

Es hat sich gezeigt, daß mit dem beschriebenen Aufbau der Schichten 10, 12, 16 kontrastreiche und für ein Lesegerät gut detektierbare Markierungen erzielbar sind, ohne daß es zu sichtbaren Unregelmäßigkeiten an der Oberfläche der Karte kommt.

Auf der Deckschicht 10 oder wahlweise auch direkt auf der schwarzen Schicht 12 kann eine Druckschicht 20 aufgebracht sein, die aus einer Farbe besteht, die für die Prüfwellenlänge und die Laserwellenlänge durchlässig ist. Derartige Farben sind bekannt und können immer eingesetzt werden, wenn aus gestalterischen Gründen die Karte nicht durchgehend schwarz ausgebildet sein soll. Für den Fall, daß andere Farben verwendet werden, die beispielsweise IR-Licht stark absorbieren, wird in der Deckschicht ein Fenster 22 freigelassen, durch welches hindurch die Markierungen in die schwarze Schicht 12 eingebracht und auch ausgelesen werden können.

Nicht dargestellt ist ein Kartenaufbau, bei dem die Markierungen 14 nicht in der schwarzen Folie 12, sondern in einer darunterliegenden sensibilisierten Zwischenschicht 16a ausgebildet sind. In einem solchem Fall darf die schwarz erscheinende Folie 12 die Laserenergie nicht absorbieren, so daß eine Markierung erst in der darunterliegenden Schicht 16a erfolgt, die so ausgebildet sein muß, das sie die Laserenergie in ausreichendem Maße absorbiert.

In der Deckschicht 10, die über der schwarzen Schicht 12 liegt, können Iriodine eingelagert sein, die einen ästhetisch besonders wirkungsvollen Effekt hervorrufen, für Licht im Wellenlängenbereich der Infrarotstrahlung aber durchlässig sind. Dadurch wird weder das Einschreiben noch das Auslesen der Markierungen beeinträchtigt.

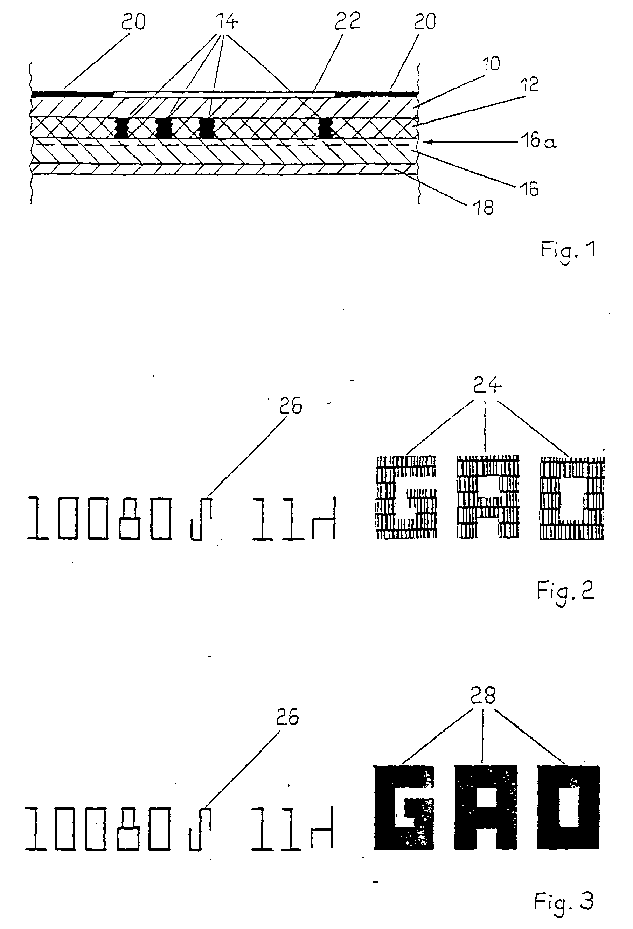

Die schwarz erscheinende Folie 12 braucht den Datenträger nicht vollflächig abzudecken, sie kann auf einem Informationsträger auch in Form von Mustern, Zeichen oder eines Logos aufgebracht sein, wie dies in Fig. 2 mit dem Bezugszeichen 24 dargestellt ist. Innerhalb des Umrisses der schwarzen Buchstaben GAO ist ein Miniatur-Binärcode hoher Informationsdichte aufgebracht, der mit einem handeslsüblichen OCR-Leser noch auflösbar ist. Wie sich aus Fig. 2 unschwer ablesen läßt, ist die Informationsdichte der OCR-Schrift 26 wesentlich geringer als die des Binärcodes 24. Wie man der Fig. 3 entnehmen kann, befindet sich der Binärcode unterhalb einer schwarzen Deckschicht 28, die für sichtbares Licht im Wellenlängenbereich von etwa 400 bis 700 nm undurchlässig ist und daher schwarz erscheint. Die Schicht ist jedoch beispielsweise für IR-Strahlen durchlässig, so daß der Binärcode 24 durch die schwarze Schicht 28 in den unter der schwarzen Schicht liegenden Informationsträger eingeschrieben bzw. eingebrannt werden kann. In gleicher Weise ist ein Auslesen des Binärcodes mit einer im IR-Bereich liegenden Prüfstrahlung durch die schwarze Schicht 28 problemlos möglich.

Die Informationen der OCR-Schrift kann, um die Verfälschungssicherheit zu erhöhen, nochmals im Binärcode 24 wiederkehren.

Die Möglichkeit, die schwarze Schicht 28 in Form von Buchstaben, Mustern oder Zeichen aufzubringen, die zwar selbst eine Information darstellen, aber eine darunterliegende Information visuell abdecken, wie es in der Fig. 3 gezeigt ist, eröffnet eine breite Palette von Gestaltungsmöglichkeiten für Datenträger bzw. Karten, die einen hohen Sicherheitsstandard aufweisen.

## Patentansprüche

1. Mehrschichtiger, kartenförmiger Datenträger mit einer im sichtbaren Wellenlängenbereich schwarz erscheinenden Schicht, die für Prüfstrahlen in einem unsichtbaren Wellenlängenbereich außerhalb der Wellenlängen zwischen etwa 400 und 700 nm durchlässig ist, **dadurch gekennzeichnet**, daß die schwarze Schicht (12) oder eine unterhalb dieser angeordnete Schicht (16a) Strahlungsenergie im Wellenlängenbereich eines Laserstrahlschreibers derart absorbieren kann, daß damit eine Markierung (14) erzeugt werden kann, die zwar durch die Prüfstrahlen feststellbar ist, aber von der schwarz erscheinenden Schicht (12) derart getarnt ist, daß sie visuell nicht erkennbar ist.

2. Datenträger nach Anspruch 1, **dadurch gekennzeichnet**, daß vorderseitig der schwarzen Schicht (12) eine transparente schwach sensibilisierte Schicht (10) und rückseitig eine opake Schicht (16) angeordnet ist.

3. Datenträger nach Anspruch 1 oder 2, **dadurch gekennzeichnet**, daß vorderseitig der schwarzen Schicht (12) transparente, opake oder farbige Schichten angeordnet sind, die entweder für die Prüfstrahlen durchlässig sind oder ein Fensterbereich ausgespart bleibt, unter dem die Markierungen (14) angeordnet sind.

4. Datenträger nach einem der Ansprüche 1 bis 3, **dadurch gekennzeichnet**, daß oberhalb der schwarzen Schicht (12) iriodinhaltige Drucke und/oder Folien angeordnet sind.

5. Datenträger nach einem der Ansprüche 1 bis 4, **dadurch gekennzeichnet**, daß die schwarze Schicht (12) nicht vollflächig, sondern in Form visuell erkennbarer bzw. lesbarer Muster oder Zeichen auf einem Informationsträger aufgebracht ist.

6. Datenträger nach Anspruch 5, **dadurch gekennzeichnet**, daß die Muster oder Zeichen eine solche Größe haben, daß sie von einem handelsüblichen OCR-Lesegerät erfaßbar sind.

7. Datenträger nach Anspruch 6, **dadurch gekennzeichnet**, daß die von der schwarzen Schicht (28) abgedeckten Markierungen (24) ein aus hellen und dunklen Bitfeldern gebildeter Binär-Code ist, der eine, verglichen mit der OCR-Schrift, hohe Informationsdichte hat.

8. Datenträger nach Anspruch 6 oder 7, **dadurch gekennzeichnet**, daß die in Form von Zeichen oder Mustern vorliegende schwarze Schicht (28) und eine OCR-Schrift (26) gemeinsam auf dem Informationsträger angeordnet sind.

9. Datenträger nach Anspruch 8, **dadurch gekennzeichnet**, daß die in der OCR-Schrift (26) enthaltene Information in einer bestimmten Beziehung zu der Information steht, welche durch die von der schwarzen Schicht (28) abgedeckte Markierung (24) dargestellt wird.

10. Verfahren zum Einbringen einer Markierung in einen kartenförmigen Datenträger mit einer im sichtbaren Wellenlängenbereich schwarz erscheinenden Schicht, die für Prüfstrahlen in einem unsichtbaren Wellenlängenbereich außerhalb der Wellenlängen zwischen etwa 400 und 700 nm durchlässig ist, **dadurch gekennzeichnet**, daß die Markierung in die schwarze Schicht (12) oder eine unterhalb dieser Schicht angeordnete Schicht (16a) mit Hilfe eines Laserstrahlschreibers so eingebracht wird, daß sie zwar durch die Prüfstrahlen feststellbar ist, aber von der schwarz erscheinenden Schicht (12) derart getarnt ist, daß sie visuell nicht erkennbar ist.

11. Verfahren nach Anspruch 10, **dadurch gekennzeichnet**, daß die Intensität des Laserschreibers so eingestellt wird, daß an der Oberfläche des Datenträgers keine Verwerfungen oder thermische Verzüge entstehen, die im Glanzwinkel visuell erkennbar wären.

12. Verfahren nach Anspruch 10 oder 11, **dadurch gekennzeichnet**, daß die Wellenlänge des Laserschreibers und die der Prüfstrahlung im IR-Bereich liegen.

## Claims

1. A multilayer card-shaped data carrier having a layer that appears black in the visible wave range and is permeable for testing rays in an invisible wave range outside wavelengths between about 400 and 700 nm, characterized in that the black layer (12) or a layer (16a) disposed therebelow can absorb radiant energy in the wave range of a laser pencil in such a way as to produce a marking (14) that is detectable by the testing rays but camouflaged by the apparently black layer (12) such that it is not recognizable visually.

2. The data carrier of claim 1, characterized in that a transparent, weakly sensitized layer (10) is disposed on the front of the black layer (12) and an opaque layer (16) on the back.

3. The data carrier of claim 1 or 2, characterized in that transparent, opaque or colored layers are disposed on the front of the black layer (12) that are either permeable for the testing rays or have a window area under which the markings (14) are disposed.

4. The data carrier of any of claims 1 to 3, characterized in that prints and/or films containing pearlescent pigments (Iriodin) are disposed above the black layer (12).

5. The data carrier of any of claims 1 to 4, characterized in that the black layer (12) is applied to an information carrier not all over but in the form of visually recognizable or readable patterns or characters.

6. The data carrier of claim 5, characterized in that the patterns or characters are of a size so as to be detectable by a commercial OCR reader.

7. The data carrier of claim 6, characterized in that the markings (24) covered by the black layer (28) are a binary code formed from light and dark bit fields and having a high information density compared with the OCR print.

8. The data carrier of claim 6 or 7, characterized in that the black layer (28) present in the form of characters or patterns and an OCR print (26) are disposed jointly on the information carrier.

9. The data carrier of claim 8, characterized in that the information contained in the OCR print (26) has a certain relationship with the information which is shown by the marking (24) covered by the black layer (28).

10. A method for producing a marking in a card-shaped data carrier having a layer that appears black in the visible wave range and is permeable for testing rays in an invisible wave range outside wavelengths between about 400 and 700 nm, characterized in that the marking is incorporated in the black layer (12) or a layer (16a) disposed below said layer using a laser pencil in such a way as to detectable by the testing rays but camouflaged by the apparently black layer (12) such that it is not recognizable visually.

11. The method of claim 10, characterized in that the intensity of the laser pencil is adjusted in such a way that no warps or thermal distortions arise on the surface of the data carrier that would be visually recognizable at the grazing angle.

12. The method of claim 10 or 11, characterized in that the wavelength of the laser pencil and that of the testing radiation are within the IR range.

## Revendications

1. Support de données en forme de carte avec plusieurs couches, ayant une couche apparaissant en noir dans la plage des longueurs d'ondes visibles, perméable à des rayons de contrôle dans une plage de longueurs d'ondes invisible hors de la longueur d'ondes située entre environ 400 et 700 nm, caractérisé en ce que la couche noire (12) ou la couche (16a) disposée au-dessous de celle-ci peut absorber de l'énergie de rayonnement dans la plage de longueurs d'ondes d'un enregistreur à rayon laser de manière qu'on puisse ainsi générer un marquage (14) pouvant certes être constaté par les rayons dc contrôle mais qui soit camouflé par la couche (12) à allure noire de manière à ne pas être identifiable visuellement.

2. Support de données selon la revendication 1, caractérisé en ce qu'en face avant de la couche noire est disposée une couche (10) transparente, faiblement sensibilisée et en face arrière une couche (16) opaque.

3. Support de données selon la revendication 1 ou 2, caractérisé en ce que, en face avant de la couche noire (12), sont soit disposées des couches transparentes opaques ou colorées, qui sont perméables aux rayons de contrôle, soit on laisse subsister une zone en fenêtre sous laquelle les marquages (14) sont disposés.

4. Support de données selon l'une des revendications 1 à 3, caractérisé en ce que des impressions et/ou des feuilles contenant de l'iriodine sont disposées au-dessus de la couche noire (12).

5. Support de données selon l'une des revendications 1 à 4, caractérisé en ce que la couche noire (12) n'est pas appliquée sur toute la surface mais sous la forme de motifs ou de caractères-signes pouvant être identifiés ou lus visuellement, sur un support d'informations.

6. Support de données selon la revendication 5, caractérisé en ce que les motifs ou caractères ont une taille faisant qu'ils peuvent être appréhendés par un appareil de lecture OCR (à reconnaissance optique de caractères) du commerce.

7. Support de données selon la revendication 6, caractérisé en ce que les marquages (24) recouverts par la couche noire (28) sont un code binaire constitué par des champs de bits clairs et sombres, code ayant une densité d'informations élevée en comparaison de l'écriture OCR.

8. Support de données selon la revendication 6 ou 7, caractérisé en ce que la couche noire (28) se présentant sous la forme de caractères ou de motifs et une écriture OCR (26) sont disposées conjointement sur le support d'informations.

9. Support de données selon la revendication 8, caractérisé en ce que l'information contenue dans l'écriture OCR(26) est placée dans une relation déterminée par rapport à l'information représentée par le marquage (24) recouvert par la couche noire (28).

10. Procédé d'introduction d'un marquage dans un support de données sous forme de carte avec une couche d'apparence noire dans la plage de longueurs d'ondes visibles, perméable à des rayons de contrôle dans une plage de longueurs d'ondes invisibles hors des longueurs d'ondes comprises entre environ 400 et 700 nm, caractérisé en ce que le marquage est introduit dans la couche noire (12) ou la couche (16a) disposée au-dessous de cette couche, à l'aide d'un enregistreur à rayon laser, de manière à être certes détectable par les rayons de contrôle mais être camouflé par la couche (12) d'apparence noire de manière à ne pas être identifiable visuellement.

11. Procédé selon la revendication 10, caractérisé en ce que l'intensité de l'enregistreur laser est réglée, de manière que sur la surface du support de données ne soit produit aucun gondolement ni retrait thermique, qui serait identifiable visuellement sous un angle de Bragg.

12. Procédé selon la revendication 10 ou 11, caractérisé en ce que la longueur d'ondes de l'enregistreur laser et celle du rayonnement de contrôle sont situées dans la plage des infrarouges.
